Europäisches Patentamt

European Patent Office

Office européen des brevets

(11) Publication number: **0 253 416**
**A1**

## (12) EUROPEAN PATENT APPLICATION

(21) Application number: **87201152.3**

(22) Date of filing: **15.06.87**

(51) Int. Cl.⁴: **C08G 67/02 , B01J 31/00**

(30) Priority: **24.06.86 NL 8601641**

(43) Date of publication of application:
**20.01.88 Bulletin 88/03**

(84) Designated Contracting States:
**BE DE FR GB IT NL**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Drent, Eit
Badhuisweg 3
NL-1031 CM Amsterdam(NL)**

(74) Representative: **Aalbers, Onno et al
P.O. Box 302
NL-2501 CH The Hague(NL)**

(54) **Catalyst compositions.**

(57) Novel catalyst compositions, caracterized in that they are based on

    a) a palladium compound,

    b) a main group metal salt of an acid with a pKa of less than 2, provided that the acid is not a hydrohalogenic acid, or a mixture of such a salt and such an acid,

    c) a bidentate ligand of the general formula $R^1R^2\text{-}M\text{-}R\text{-}M\text{-}R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group having at least two carbon atoms in the bridge, and

    d) an ester or a ketone.

EP 0 253 416 A1

## CATALYST COMPOSITIONS

The invention relates to novel compositions which are suitable for use as catalysts in the preparation of polymers of carbon monoxide with one or more olefinically unsaturated organic compounds.

High molecular weight linear polymers of carbon monoxide with one or more olefinically unsaturated organic compounds (for the sake of brevity referred to as A) in which the monomer units occur in an alternating order and which therefore consist of units of the general formula -(CO)-A'-wherein A' represents a monomer unit from a monomer A used, can be prepared by using catalyst compositions based on:

a) a palladium compound,

b) an acid with a pKa of less than 2, provided that the acid is not a hydrohalogenic acid, and

c) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group which contains at least two carbon atoms in the bridge.

An investigation carried out by the Applicant into these catalyst compositions has recently shown that when the acid mentioned as component b) is replaced partly or wholly by a non-noble transition metal salt of the acid concerned, catalyst compositions are obtained which possess an attractive activity for the polymerization of carbon monoxide with one or more olefinically unsaturated organic compounds. The investigation has further revealed that the activity of the catalyst compositions based on a non-noble transition metal salt or a mixture of a salt and an acid as component b) can be much enhanced by incorporating a quinone into these compositions.

A further investigation into the subject was directed at the possibility of replacing the acid mentioned as component b) partly or wholly by a main group metal salt of the acid concerned. It was found that:

1) Catalyst compositions in which the acid mentioned as component b) is replaced by and alkali metal salt or an alkaline earth metal salt of the acid concerned possess no or insufficient activity for the polymerization of carbon monoxide with one or more olefinically unsaturated organic compounds.

2) Catalyst compositions in which the acid mentioned as component b) is replaced by a Group 3A-5A metal salt of the acid concerned possess attractive activities for the said polymerization.

3) Contrary to what is seen in catalyst compositions containing a non-noble transition metal salt, the incorporation of a quinone as the fourth component into the catalyst compositions containing a main group metal salt has no effect on their activity for the said polymerization.

4) The incorporation of an ester or a ketone as the fourth component into the catalyst compositions containing a main group metal salt considerably enhances their activity for the polymerization of carbon monoxide with one or more olefinically unsaturated organic compounds. Thus the activity of catalyst compositions containing an alkali or alkaline earth metal salt and displaying insufficient activity per se can be increased to an attractive level. Furthermore, the activity of catalyst compositions which contain a Group 3A-5A metal salt and already possess an attractive activity by nature, is enhanced even further.

Catalyst compositions based on the components a) and c), a main group metal salt or a mixture of such a salt and acid as component b) and in addition an ester or a ketone as component d) are novel.

The present patent application therefore relates to novel catalyst compositions based on

a) a palladium compound,

b) a main group metal salt of an acid with a pKa of less than 2, provided that the acid is not a hydrohalogenic acid, or a mixture of such a salt and such an acid,

c) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge, and

d) an ester or a ketone.

The patent application further relates to the application of these catalyst compositions in the preparation of polymers of carbon monoxide with one or more olefinically unsaturated organic compounds as well as to the polymers thus prepared and to shaped objects which consist at least partly of these polymers.

Preferably the palladium compound used as component a) is a palladium salt of a carboxylic acid and in particular palladium acetate. Examples of suitable acids with a pKa of less than 2 (determined in aqueous solution at 18°C) are sulphuric acid, perchloric acid, sulphonic acids, such as methanesulphonic acid, trifluoromethanesulphonic acid and para-toluenesulphonic acid and carboxylic acids, such as trichloroacetic acid, difluoroacetic acid and trifluoroacetic acid. Preference is given to para-toluenesulphonic acid and trifluoroacetic acid. The salt of the main group metal is preferably applied in a quantity of from 0.5 to 200 and in particular 1.0 to 100, equivalents per gram atom of palladium. If an acid is used in addition to a salt, preference is given to compositions in which the ratio between the number of equivalents of salt and the number of equivalents of acid is higher than 1.

In the present patent application main group metals should be taken to be all the metals belonging to the main groups 1A-5A. Examples of maingroup metals whose salts are very suitable for use as component b) in the catalyst compositions according to the invention are the Group 1A metals lithium, sodium, potassium, rubidium and cesium, the Group 2A metals magnesium, calcium, strontium and barium, the Group 3A metals aluminium, gallium, indium and thallium, the Group 4A metals germanium, tin and lead, and the Group 5A metals antimony and bismuth.

Special preference is given to the use of salts of the following main group metals: the Group 1A metals lithium, sodium and potassium, the Group 2A metal magnesium, theGroup 3A metals aluminium and gallium, the Group 4A metals tin and lead and the Group 5A metal antimony.

In the bidentate ligand, M is preferably phosphorus. The groups $R^1$, $R^2$, $R^3$ and $R^4$ present in the bidentate ligand preferably contain 6 to 14 carbon atoms. Special preference is given to bidentate ligands in which the groups $R^1$, $R^2$, $R^3$ and $R^4$ are phenyl groups or alkyl-substituted phenyl groups. The bivalent organic bridging group R preferably contains three carbon atoms in the bridge. Examples of suitable bidentate ligands are:
1,3-bis(di-p-tolylphosphine)propane,
1,3-bis(di-p-methoxyphenylphosphine)propane,
1,3-bis(diphenylphosphine propane, and
2-methyl-2-(methyldiphenylphosphine)-1,3-bis-(diphenylphosphine)propane. Preferably either one of the latter two bidentate ligands is used. The bidentate ligand is preferable applied in a quantity of 0.1-5 and in particular of 0.5-1.5 mol per mol of palladium compound.

Both linear and cyclic esters and ketones may be incorporated in the catalyst compositions as the component d). Examples of cyclic esters and ketones are butyrolactone, cyclopentanone, cyclohexanone and cyclooctanone. The esters and ketones may be either aromatic, or aromatic/aliphatic, or exclusively aliphatic. Examples of aromatic and aromatic/ aliphatic esters and ketones are methyl benzoate, benzophenone and acetophenone. The esters and ketones may contain one or more ester and ketone groups. Examples of esters and ketones containing more than one ester and ketone group are dimethyl carbonate, dimethyl terphthalate and hexanedione-2,5. In addition to ester and ketone groups, the esters and ketones may contain other functional groups, such as ether groups and halogens. Examples of such compounds are methoxy-diethyl ketone, chloroacetone and methoxy-methyl propionate. Compounds containing both an ester group and a ketone group are also eligible as component d). An example of such a compound is γ-oxo-methyl hexanoate. Preferably, esters and ketones having a linear structure are used as component d). Moreover, preference is given to aliphatic esters and ketones. Examples of very suitable esters are esters of aliphatic monoalcohols and aliphatic mono and dicarboxylic acids, such as methyl acetate, ethyl acetate. methyl propionate, ethyl propionate and dimethyl oxalate and esters of aliphatic dialcohols and aliphatic monocarboxylic acids, such as ethylene glycol monoacetate ethylene glycol diacetate, propylene glycol monoacetate and propylene glycol diacetate. Examples of very suitable ketones are dialkyl ketones such as acetone, methyl-ethyl ketone and diethyl ketone. Both ethylene glycol diacetate and acetone have afforded very good results.

The preferred quantity of ester and ketone used is 0.5-10000 and in particular 1-5000 mol per gram atom of main group metal.

The polymerization using the catalyst compositions according to the invention is preferably carried out in a liquid diluent. Very suitable liquid diluents are lower alcohols such as methanol and ethanol.

Eligible olefinically unsaturated organic compounds that can be polymerized with carbon monoxide with the aid of the catalyst compositions according to the invention are both compounds which consisst exclusively of carbon and hydrogen and compounds which, in addition to carbon and hydrogen, contain one or more hetero-atoms. By preference the catalyst compositions according to the invention are used to prepare polymers of carbon monoxide with one or more olefinically unsaturated hydrocarbons. Examples of suitable hydrocarbon monomers are ethene and other α-olefins, such as propene, butene-1, hexene-1, and octene-1 as well as styrene and alkyl-substituted styrenes, such as p-methyl styrene and p-ethyl styrene. The catalyst compositions according to the invention are especially suitable for use in the preparation of copolymers of carbon monoxide with ethene and in the preparation of terpolymers of carbon monoxide with ethene and with an other olefinically unsaturated hydrocarbon, in particular propene.

The quantity of catalyst composition applied in the preparation of the polymers may vary within wide ranges. Per mol of olefinically unsaturated compound to be polymerized, a quantity of catalyst is used which preferably contains $10^{-7}$-$10^{-3}$ and in particular $10^{-6}$-$10^{-4}$ gram atom of palladium.

Preferably, the preparation of the polymers is carried out at a teperature of 20-200°C and a pressure of 1-200 bar and in particular at a temperature of 30-150°C and a pressure of 20-100 bar. In the mixture to be polymerized the molar ratio of the olefinically unsaturated organic compounds relative to carbon monoxide preferably is 10:1-1:5 and in particular 5:1-1:2. The carbon monoxide used in the preparation of the polymers according to the invention need not be pure. It may contain such contaminants as hydrogen, carbon dioxide and nitrogen.

The invention will now be illustrated with the aid of the following examples.

## Example 1

A magnetically stirred autoclave of 250 ml capacity was charged with a catalyst solution consisting of:
50 ml of methanol
0.1 mmol of palladium acetate,
0.15 mmol of 1,3-bis(diphenylphosphine)propane, and
1 mmol of potassium para-tosylate.
Carbon monoxide was introduced into the autoclave until a pressure of 30 bar was reached and then ethene until a pressure of 60 bar was reached. Finally, the autoclave was heated to 80°C. After 5 hours the autoclave was cooled down to room temperature and then the pressure was released. No more than a trace of polymer material was obtained.

## Example 2

This example was executed in substantially the same manner as Example 1, except that now the catalyst solution in addition contained 10 mmol of 1,4-benzoquinone. Again no more than a trace of polymer material was obtained.

## Example 3

A carbon monoxide/ethene copolymer was prepared by substantially repeating Example 1, but with the following differences:
a) the catalyst solution in addition contained 20 ml of ethylene glycol diacetate, and

b) after the pressure had been released the polymer formed was filtered off, washed with methanol and dried in vacuo at room temperature. The yield was 16 g of copolymer, so the polymerization rate was 320 g of copolymer/g of palladium/hour.

## Example 4

A carbon monoxide/ethene copolymer was prepared in substantially the same manner as the copolymer of Example 3, the difference being that now the catalyst solution contained 20 ml of acetone instead of 20 ml of ethylene glycol diacetate. The yield was 15 g of copolymer, so the polymerization rate was 300 g of copolymer/g of palladium/hour.

## Example 5

A carbon monoxide/ethene copolymer was prepared in substantially the same manner as the copolymer of Example 3, the differences being that
a) the catalyst solution contained no ethylene glycol diacetate, and 1 mmol of tin sulphate instead of 1 mmol of potassium para-tosylate, and
b) the reaction time was 1 hour. The yeild was 5 g of copolymer, so the polymerization rate was 500 g of copolymer/g of palladium/hour.

## Example 6

A carbon monoxide/ethene copolymer was prepared in substantially the same manner as the copolymer of Example 3, the differences being that
a) the catalyst solution contained 10 mmol of 1,4-benzoquinone instead of 20 ml of ethylene glycol diacetate, and 1 mmol of tin sulphate instead of 1 mmol of potassium para-tosylate, and
b) the reaction time was 1 hour. The yield was 5 g of copolymer, so the polymerization rate was 500 g of copolymer/g of palladium/hour.

## Example 7

This example was carried out in substantially the same manner as Example 1, except that now the catalyst solution contained 1 mmol of lithium para-tosylate instead of 1 mmol of potassium para-tosylate. This example, too, yielded no more than a trace of polymer material.

## Example 8

A carbon monoxide/ethene copolymer was prepared in substantially the same manner as the copolymer of Example 3, the difference being that now the catalyst solution contained no ethylene glycol diacetate, and 2 mmol of magnesium sulphate instead of 1 mmol of potassium para-tosylate.
The yield was 3.5 g of copolymer, so the polymerization rate was 70 g of copolymer/g of palladium/hour.

## Example 9

A carbon monoxide/ethene copolymer was prepared in substantially the same manner as the copolymer of Example 3, the differences being that
a) the catalyst solution conained no ethylene glycol diacetate, and 2 mmol of antimony sulphate instead of 1 mmol of potassium para-tosylate, and
b) the reaction temperature was 55°C. The yield was 17.5 g of copolymer, so the polymerization rate was 350 g of copolymer/g of palladium/hour.

## Example 10

A carbon monoxide/ethene copolymer was prepared in substantially the same manner as the copolymer of Example 3, the differences being that
a) the catalyst solution contained 2 mmol of antimony sulphate instead of 1 mmol potassium para-tosylate,
b) the reacion temperature was 55°C,
c) the reaction time was 2 hours. The yield was 17 g of copolymer, so the polymerization rate was 850 g of copolymer/g of palladium/hour.

Of the polymers prepared according to Examples 3-6 and 8-10, the polymers prepared according to Examples 3, 4 and 10 are polymers according to the invention. In the preparation of these polymers use was made of catalyst compositions according to the invention containing a main group metal salt, together with an ester or a ketone. Examples 1, 2 and 5-9 fall outside the scope of the invention and have been included in teh patent application for comparison.
The results of Examples 1, 7 and 8 show the inadequacy of the activities of catalyst compositions which contain an alkali(ne earth) metal salt as the main group salt, and in which no ester or ketone is incorporated.

Comparison of the results of Examples 1 and 5 with those of Examples 2 and 6, respectively, shows that the incorporation of a quinone in the catalyst compositions containing a main group metal salt does not lead to enhanced activity.
The results of Examples 3 and 4 show that the activities of catalyst compositions containing an alkali metal salt, which compositions as such possess insufficient activities, are raised to an attractive level by the incorporation of an ester or ketone.
The results of Examples 9 and 10 show that catalyst compositions containing a Group 5A metal salt have attractive activities themselves, which can be enhanced still further by the incorporation of an ether into these compositions.
All of the carbon monoxide/ethene copolymers prepared according to Examples 3-6 and 8-10 had melting points of 257°C. With the aid of $^{13}$C-NMR analysis it was established that these polymers had a linear alternating structure and thus consisted of units of the formula -CO-($C_2H_4$)-.

## Claims

1. Novel catalyst compositions, characterized in that they are based on
a) a palladium compound,
b) a main group metal salt of an acid with a pKa of less than 2, provided that the acid is not a hydrohalogenic acid, or a mixture of such a salt and such an acid,
c) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl which may or may not be substituted with polar groups and R represents a bivalent organic bridging group having at least two carbon atoms in the bridge, and
d) an ester or a ketone.

2. Catalyst compositions as claimed in claim 1, characterized in that they are based on a salt of a sulphonic acid, such as p-toluenesulphonic acid, or a salt of a carboxylic acid, such as trifluoroacetic acid, or a mixture of such a salt and such an acid as the component b).

3. Catalyst compositions as claimed in claim 1 or 2, characterized in that the main group metal is chosed from the group formed by lithium, sodium, potassium, magnesium, aluminium, gallium, tin, lead and antimony.

4. Catalyst compositions as claimed in claims 1 to 3, characterized in that component c) is 1,3-bis-(diphenylphosphine)-propane or 2-methyl-2-(methyldiphenylphosphine)-1,3-bis-(diphenylphosphine)propane.

5. Catalyst compositions as claimed in one or more of claims 1-4, characterized in that component d) is an aliphatic ester or ketone having a linear structure.

6. Catalyst compositions as claimed in claim 5, characterized in that component d) is an ester of an aliphatic monoalcohol and a mono of dicarboxylic acid or an ester of an aliphatic dialcohol and an aliphatic monocarboxylic acid.

7. Catalyst compositions as claimed in claim 5, characterized in that component d) is a dialkyl ketone, such as acetone.

8. Process for the preparation of polymers, characterized in that a mixture of carbon monoxide and one or more olefinically unsaturated organic compounds is polymerized by using a catalyst composition as claimed in any one of claims 1 to 7.

9. Process as claimed in claim 8, characterized in that carbon monoxide is copolymerized with ethene.

10. Process as claimed in claim 9, characterized in that carbon monoxide is copolymerized with ethene and an other olefinically unsaturated hydrocarbon.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 170 311 (SHELL)<br>* Claims 1,3,7,8,16; page 8, lines 15-21; page 7, lines 1-7 * | 1-5,7 | C 08 G 67/02<br>B 01 J 31/00 |
| Y | | 1-10 | |
| | --- | | |
| Y | US-A-4 076 911 (D.M. FENTON)<br>* Claims 1-11; column 2, lines 19-38 * | 1-10 | |
| | ----- | | |

TECHNICAL FIELDS SEARCHED (Int. Cl.4)

B 01 J
C 08 G

The present search report has been drawn up for all claims

| Place of search | Date of completion of the search | Examiner |
|---|---|---|
| THE HAGUE | 10-11-1987 | DECOCKER L. |